# EUROPÄISCHE PATENTSCHRIFT

(11) **EP 2 652 275 B1**
(45) Veröffentlichungstag und Bekanntmachung des Hinweises auf die Patenterteilung: **29.04.2015**
(21) Anmeldenummer: 11794156.7
(22) Anmeldetag: 09.12.2011
(51) Int. Cl.: F01N 3/20

(54) **TANKEINBAUMODUL, FLÜSSIGKEITSTANK**
TANK INSERT MODULE, LIQUID TANK
MODULE DE MONTAGE DE RÉSERVOIR, RÉSERVOIR DE LIQUIDE

(30) Priorität: 14.12.2010 DE 102010062982
(43) Veröffentlichungstag der Anmeldung: 23.10.2013
(73) Patentinhaber: Robert Bosch GmbH, 70442 Stuttgart (DE)
(72) Erfinder: LANDES, Ewgenij, 71686 Remseck (DE); SCHOTT, Steffen, 71701 Schwieberdingen (DE)
(86) Internationale Anmeldenummer: PCT/EP2011/072336
(87) Internationale Veröffentlichungsnummer: WO 2012/080129

(56) Entgegenhaltungen:
- EP-A1- 2 161 421
- DE-A1-102005 036 430
- DE-A1-102006 027 487
- DE-A1-102009 012 983

## Beschreibung

Die Erfindung betrifft ein Tankeinbaumodul zur Entnahme von Flüssigkeit aus einem Fahrzeugtank, umfassend einen Grundkörper aus einem Kunststoff, an dem eine Flüssigkeitsentnahmeeinrichtung, die wenigstens eine dem Tankinnenraum zuordenbare Entnahmeöffnung umfasst und mindestens ein elektrisches Heizelement angeordnet sind, wobei das elektrische Heizelement einen Heizkörper mit einer umspritzten Kunststoffummantelung umfasst.

Ferner betrifft die Erfindung einen Flüssigkeitstank für Fahrzeuge, insbesondere für ein Abgasnachbehandlungssystem eines Kraftfahrzeugs, mit wenigstens einer Wandung, die eine Öffnung aufweist, in welcher ein Tankeinbaumodul zur Entnahme von Flüssigkeit aus dem Tank die Öffnung verschließend angeordnet ist.

### Stand der Technik

Tankeinbaumodule sowie Flüssigkeitstanks der eingangs genannten Art sind dem Fachmann aus dem Stand der Technik bekannt. So offenbart beispielsweise die deutsche Offenlegungsschrift DE 10 2006 027 487 A1 einen Fahrzeugtank für wässrige Harnstofflösungen, der eine Öffnung aufweist, in welche eine Funktionseinheit entsprechend einem Tankeinbaumodul angeordnet ist. Das Tankeinbaumodul umfasst einen Grundkörper aus Kunststoff, der an dem Tank gehalten ist. An dem Grundkörper ist eine Pumpe zur Entnahme von Flüssigkeit aus dem Tank vorgesehen, wobei der Pumpe ein Kanal mit einer Entnahmeöffnung zugeordnet ist. Weiterhin weist das Tankeinbaumodul ein elektrisches Heizelement auf, um bei tiefen Temperaturen ein Auftauen gefrorener Flüssigkeit zu ermöglichen, sodass auch bei tiefen Temperaturen aus dem Tank entnehmbare Flüssigkeit zur Verfügung steht beziehungsweise zur Verfügung gestellt wird. Das Heizelement umfasst einen aus Aluminium gefertigten Heizkörper, der mit Kunststoff umspritzt ist und somit eine Kunststoffummantelung aufweist. Der Kunststoff dient in erster Linie dazu, den Heizkörper vor dem direkten Kontakt mit der in dem Tank befindlichen Flüssigkeit zu schützen. Für ein dauerhaft die Funktion gewährleistendes System sind sowohl die Anbindung des Heizelements an beispielsweise die Elektrik/Elektronik des Fahrzeugs sowie ein ausreichender Wärmeleitkoeffizient für die Kunststoffummantelung von Bedeutung.

### Offenbarung der Erfindung

Das erfindungsgemäße Tankeinbaumodul hat den Vorteil, dass das Heizelement auf besonders einfache Art und Weise mit dem Grundkörper verbindbar ist und gleichzeitig energieeffizient wirkt. Dies wird durch die Merkmale des geltenden Anspruchs 1 gewährleistet. Das erfindungsgemäße Tankeinbaumodul zeichnet sich dadurch aus, dass die Kunststoffummantelung den gleichen Kunststoff wie der Grundkörper sowie mindestens einen Füllstoff mit hoher Wärmeleitfähigkeit aufweist und mit dem Grundkörper an wenigstens einer Kontaktstelle verschweißt ist. Es ist erfindungsgemäß also vorgesehen, dass die Kunststoffummantelung des elektrischen Heizelements aus Kunststoff und mindestens einem Füllstoff, also mit mindestens einem in den Kunststoff eingearbeiteten beziehungsweise eingebrachten Stoff, der eine hohe Wärmeleitfähigkeit aufweist, besteht. Als Kunststoff wird dabei der Kunststoff gewählt, der auch zur Herstellung des Grundkörpers verwendet wurde. Durch die Wahl der gleichen Kunststoffe für die Kunststoffummantelung und den Grundkörper lassen sich die beiden Elemente schnell und sicher miteinander stoffschlüssig verbinden. Vorzugsweise wird als Kunststoff ein Hochdichtes Polyethylen, also ein sogenannter HDPE-Kunststoff verwendet beziehungsweise vorgesehen. Durch den Einsatz von HDPE-Kunststoff ist eine gute Beständigkeit insbesondere gegenüber gängigen Flüssigkeiten, die zur Abgasnachbehandlung verwendet werden, gewährleistet. Durch die Wahl der gleichen Kunststoffe lassen sich die Elemente optimal miteinander verschweißen, wodurch auf Dichtungen im Kontaktbereich verzichtet werden und das damit verbundene Risiko einer Leckage von Flüssigkeit durch Verformung, Quellung, Verformung durch Temperaturwechsel, Druckwechsel, Schwingungen und/oder Zersetzung durch Fehlbetankung minimiert wird. Alternativ oder zusätzlich ist es auch denkbar, das Tankeinbaumodul und/oder das Heizelement mit der vorteilhaften Kunststoffummantelung mit der Wandung eines Tanks direkt zu verschweißen, sofern der Tank ebenfalls aus dem HDPE-Kunststoff gefertigt ist. Durch die Verwendung von HDPE wird zwar die Wärmeleistung des Heizelements verringert, jedoch durch den Füllstoff mit hoher Wärmeleitfähigkeit kompensiert beziehungsweise vergrößert, sodass trotz Verwendung des HDPE-Kunststoffs eine Wärmeleitfähigkeit der umspritzten Kunststoffummantelung vorliegt, die zum effizienten Erwärmen der gegebenenfalls gefrorenen Flüssigkeit in dem Tank ausreicht. Dadurch wird weiterhin die Wärmeformbeständigkeit der Kunststoffummantelung erhöht und somit auch eine höhere Einsatztemperatur ermöglicht. Trotz der so insgesamt anderen Wärmeleiteigenschaften in Bezug auf den Grundkörper ist die Kunststoffummantelung sicher mittels der Schweißstelle mit dem Grundkörper verbunden beziehungsweise verbindbar. Alternativ können auch unterschiedliche Kunststoffe verwendet werden, wenn diese sich mit einander schweißen lassen und die so erzeugte Schweißstelle die notwendige Festigkeits- und Dichtheitsanforderungen erfüllt (z.B. Heizung aus gefüllten PP (Polypropylen) verschweißt mit Tankeinbaumodul aus HDPE).

Vorzugsweise macht der Füllstoff einen Anteil von 20 % bis 65 %, insbesondere 40 %, des Gewichts der Kunststoffummantelung aus. Die Wärmeleitfähigkeit von Kunststoff muss dabei um mindesten 10 % ansteigen. Vorzugsweise soll dabei die Wärmeleitfähigkeit höher sein, als die von dem aufzutauenden bzw. zu erwärmenden Medium. Bei Medium Harnstoff ist eine Wärmeleitfähigkeit der Kunststoffummantelung über 0,5 W/mK von Vorteil, insbesondere/noch besser 1 W/mK und mehr. Durch die Beimengung des Füllstoffs wird zudem der Wärmeausdehnungskoeffizient der Kunststoffummantelung im Vergleich zum ungefüllten HDPE-Kunststoff gesenkt, und somit an den Wärmeausdehnungskoeffizienten des vorzugsweise aus Aluminium bestehenden Heizkörpers angenähert. Wird das Heizelement in Betrieb genommen, also erhitzt, wird aufgrund der angepassten Wärmeausdehnungskoeffizienten insbesondere ein Lösen der Kunststoffummantelung von dem Heizkörper verhindert und bei Abkühlung werden die durch aufschrumpfen erzeugte Spannungen verringert. Vorzugsweise ist der mindestens eine Füllstoff elektrisch nicht leitfähig ausgebildet und weist bevorzugt einen spezifischen Widerstand oberhalb von 500.000 Ω · m auf.

Besonders bevorzugt werden als elektrisch nicht-leitfähiger Füllstoff mindestens ein mineralischer Füllstoff und/oder Glasfasern vorgesehen beziehungsweise in den Kunststoff eingebracht. Vorzugsweise wird die Menge des Füllstoffs derart bemessen, dass eine minimale Bruchdehnung von 2,5 % erzielt wird, um zulässige Dehnungen/Spannungen durch temperaturbedingte Verformungen zwischen dem Heizkörper und der Kunststoffummantelung nicht zu überschreiten.

Vorzugsweise ist der Heizkörper, wie bereits gesagt, zumindest im Wesentlichen aus Aluminium gebildet und weist außerdem mindestens ein PTC-Element (PTC = positive temperature coefficient/positiver Temperaturkoeffizient) zum Heizen auf. PTC-Heizelemente benötigen keine zusätzlichen Einrichtungen zur Temperaturregelung beziehungsweise zur Übertemperatursicherung. Sie sind selbstregelnd ausgebildet und können somit auf einfache Art und Weise genutzt werden. Darüber hinaus weisen sie eine kleine Bauform auf, durch welche sie sich vorzugsweise in das Heizelement integrieren lassen. Hierzu weist vorzugsweise die Kunststoffummantelung und/oder der Heizkörper eine entsprechende Aufnahmetasche zur vorzugsweise formschlüssigen Aufnahme des PTC-Heizelements auf, sodass das PTC-Heizelement vollständig in das Heizelement integriert beziehungsweise von der Kunststoffummantelung eingefasst ist.

Gemäß einer vorteilhaften Weiterbildung der Erfindung ist vorgesehen, dass mindestens ein der Entnahmeöffnung vorgeschaltetes Filterelement zur Filterung der Flüssigkeit vor deren Entnahme an dem Grundkörper angeordnet ist. Vorzugsweise ist das Filterelement dem oder einem Bereich des elektrischen Heizelements zugeordnet, sodass auch an dem Filterelement befindliche Flüssigkeit aufgetaut und die Filterwirkung genutzt werden kann. Besonders bevorzugt ist das Filterelement oder zumindest ein Filterträgerkörper des Filterelements aus dem gleichen Kunststoff wie der Grundkörper des Tankeinbaumoduls oder aus dem gleichen Material wie die Kunststoffummantelung gefertigt, sodass das Filterelement beziehungsweise dessen Filterträgerkörper durch Verschweißen an dem Tankeinbaumodul festlegbar ist. Durch die stoffschlüssige Verbindung mit der Kunststoffummantelung kann darüber hinaus die Wärme des Heizelements in den Filter beziehungsweise in das Filterträgerelement geleitet werden, um das Auftauen zu beschleunigen.

Vorzugsweise erstreckt sich der Heizkörper im Wesentlichen in einer Ebene sternartig und weist insbesondere mindestens eine Querschnittsverjüngung auf. Besonders bevorzugt befindet sich das mindestens eine PTC-Heizelement mittig in dem Heizelement beziehungsweise an dem Heizkörper, sodass die von dem PTC-Heizelement ausgehende Wärme über die sternartige Struktur des Heizkörpers in radial weiter außen liegende Bereiche transportiert beziehungsweise geleitet wird. Durch Vorsehen der mindestens einen Querschnittsverjüngung an dem Heizkörper wird die Heizenergie stufenweise über den Heizkörper verteilt. So kann durch entsprechend vorgesehene Querschnittsverjüngungen beziehungsweise -verengungen die zur Verfügung stehende Heizenergie gezielt geleitet werden, sodass vorzugsweise zuerst der Bereich des Heizelements, der der Entnahmeöffnung zugeordnet ist, erwärmt und die dort befindliche Flüssigkeit aufgetaut wird, und anschließend die übrigen Bereiche des Heizelements erwärmt werden. Dadurch kann mit gleicher zur Verfügung stehenden Heizenergie der Entnahmebereich an der Entnahmeöffnung im vorgegebenen Zeitraum aufgetaut und gleichzeitig eine große Menge an Flüssigkeit durch die nachwirkende Energieausbreitung aufgetaut werden. Zusätzlich kann die Heizenergieverteilung durch eine unterschiedliche Umspritzungsdicke der Kunststoffummantelung bedarfsgerecht beeinflusst werden.

Weiterhin ist vorgesehen, dass wenigstens eine der verschweißten Kontaktstellen zwischen dem Grundkörper und der Kunststoffummantelung des Heizelements eine elektrische Schnittstelle zwischen dem Heizelement und einer durch den Grundkörper führende Anschlussleitung bildet beziehungsweise aufweist. Besonders bevorzugt werden im Bereich der Kontaktstelle die zu den PTC-Heizelementen führenden elektrischen Leitungen aus der Kunststoffummantelung herausgeführt und enden beispielsweise direkt in ein integriertes Steckermesser. Der Grundkörper weist an entsprechender Stelle eine entsprechende Steckerleiste auf, die mit den durch den Grundkörper führenden Anschlussleitungen verbunden ist. Durch Einführen des Steckermessers in die Messerleiste wird somit der elektrische Kontakt zwischen dem mindestens einen PTC-Heizelement und einer insbesondere außerhalb des Tanks angeordneten Elektronik hergestellt. Durch Verschweißen der Kontaktstelle wird die elektrische Schnittstelle gleichzeitig mit einem sicheren und robusten Schutz gegenüber der in dem Tank befindlichen Flüssigkeit versehen. Besonders bevorzugt ist die elektrische Schnittstelle mittels einem kraftschlüssigen Verbindungsverfahren ausgebildet, wie durch bekannte Gabel-, Ramm-, Klemmkontaktierung oder dergleichen. Alternativ ist die elektrische Schnittstelle vorzugsweise derart ausgebildet, dass beim Schweißvorgang die hinzugeführte Wärme ausreicht, um eine stoffschlüssige Verbindung in der elektrischen Schnittstelle herzustellen. Hierzu weist die elektrische Schnittstelle vorzugsweise ein entsprechendes Lötmedium auf.

Ferner ist vorgesehen, dass die Anschlussleitung bevorzugt einem in die Entnahmeöffnung mündenden Entnahmekanal des Grundkörpers zugeordnet ist. Besonders bevorzugt ist die Anschlussleitung parallel derart zu dem Entnahmekanal angeordnet, dass die von der Anschlussleitung ausgehende Wärme den Entnahmekanal und die darin befindliche Flüssigkeit erwärmt beziehungsweise auftaut. Sobald das Heizelement aktiviert wird, wird also auch der Entnahmekanal erwärmt und darin befindliche Flüssigkeit aufgetaut. Vorzugsweise wird der Entnahmekanal von dem Grundkörper gebildet.

Um die möglichen Belastungen beim Druckaufbau durch eine flüssige Kavität, welche durch Umschließung durch gefrorene Flüssigkeit entsteht, so gering wie möglich zu halten, ist bevorzugt mindestens ein großer Radius, eine Schräge oder Fase an einer Kante der Kunststoffummantelung und/oder des Heizkörpers vorgesehen. Durch den Radius, die Schräge beziehungsweise Fase wird zumindest ein Teil der wirkenden Kräfte kompensiert. Besonders bevorzugt werden der große Radius oder die Schräge oder Fase an einer Kante angebracht beziehungsweise vorgesehen, die sich am unteren Teil der Heizung, also auf der dem Boden des Tanks zugewandten Seite des Heizelements, befindet.

Der erfindungsgemäße Flüssigkeitstank zeichnet sich durch die Ausbildung des Tankeinbaumoduls, wie es oben beschrieben wurde, aus. Es ergeben sich dabei die oben bereits beschriebenen Vorteile. Besonders bevorzugt ist die Wandung des Flüssigkeitstanks aus dem gleichen Material wie der Grundkörper des Tankeinbaumoduls gefertigt und der Grundkörper besonders bevorzugt mit der Wandung des Tanks verschweißt. Der Grundkörper ist vorzugsweise flanschartig ausgebildet, um die Öffnung der Wandung zu verschließen.

Im Folgenden soll die Erfindung anhand der Zeichnung näher erläutert werden. Dazu zeigen
- Figur 1: ein Tankeinbaumodul in einer perspektivischen Darstellung,
- Figuren 2A und 2B: den Heizkörper eines Heizelements in unterschiedlichen Ansichten,
- Figur 3: das Heizelement in einer perspektivischen Darstellung,
- Figur 4: eine alternative Ausführungsform des Tankeinbaumoduls,
- Figur 5: den Grundkörper des Tankeinbaumoduls aus Figur 4,
- Figur 6: das Heizelement des Tankeinbaumoduls aus Figur 4,
- Figur 7: eine vergrößerte Schnittdarstellung durch das Tankeinbaumodul gemäß Figur 4 und
- Figur 8: einen Flüssigkeitstank mit dem vorteilhaften Tankeinbaumodul in einer vereinfachten Darstellung.

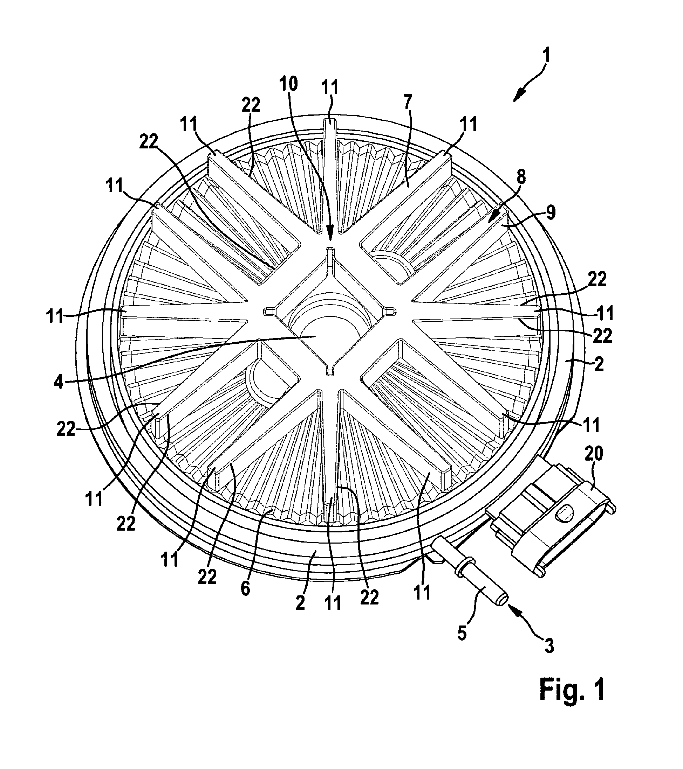

Figur 1 zeigt in einer perspektivischen Darstellung ein Tankeinbaumodul 1, das in einer Öffnung eines Tanks, vorzugsweise die Öffnung verschließend, anordenbar ist. Das Einbaumodul weist einen Grundkörper 2 auf, der aus einem HDPE-Kunststoff gefertigt ist und eine im Wesentlichen kreisförmige Grundfläche aufweist. Durch den Grundkörper 2 führt ein Entnahmekanal 3, der in eine in dem Grundkörper ausgebildete Entnahmeöffnung 4 mündet. Die Entnahmeöffnung 4 liegt dabei auf der dem Tankinneren zugewandten Seite des Grundkörpers 2 beziehungsweise des Tankeinbaumoduls 1. Der Entnahmekanal 3 erstreckt sich von der Entnahmeöffnung 4 bis zu einem radial vorstehenden Anschluss 5, welcher beispielsweise mit dem Eingang einer Saugeinrichtung verbindbar ist.

Der Entnahmekanal 3 ist vorzugsweise einstückig mit dem Grundkörper 2 ausgebildet, sodass der Entnahmekanal 3 direkt in den Grundkörper 2 integriert ist. Der Entnahmeöffnung 4 ist ein Filterelement 6 zugeordnet, das kreisringförmig ausgebildet und koaxial zu dem Grundkörper 2 ausgerichtet ist. Das Filterelement 6 dient dazu, die in dem Tank befindliche Flüssigkeit zu filtern, bevor diese durch den Entnahmekanal 3 dem Tank entnommen wird. Oberhalb des Filterelements 6 ist ein Heizelement 7 angeordnet, das sich im Wesentlichen über den gesamten Grundkörper 2 beziehungsweise über das Filterelement 6 sternförmig erstreckt. Das Heizelement 7 umfasst einen Heizkörper 8, der mit einer Kunststoffummantelung 9 umgeben, insbesondere umspritzt ist.

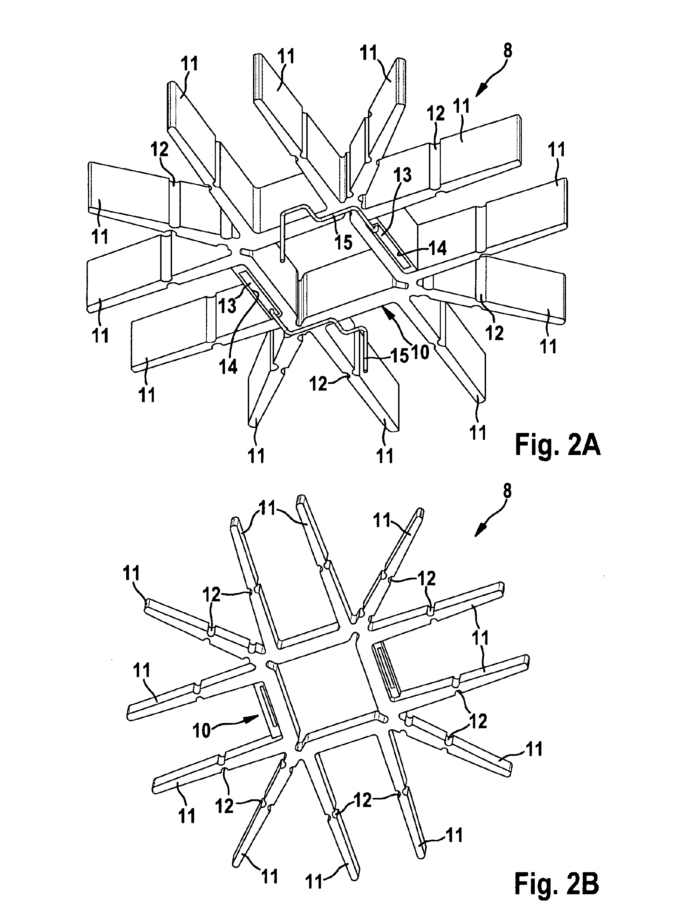

Figuren 2A und 2B zeigen hierzu den Heizkörper 8 in unterschiedlichen perspektivischen Darstellungen. Der Heizkörper 8 weist eine rippenartige Struktur auf, mit einem quadratischen Kern 10, von dessen vier Ecken sich jeweils drei Arme 11 erstrecken, die in einem Winkel von 45° zueinander ausgerichtet sind. Der Kern 10 kann alternativ auch auf einer oder mehreren Seiten offen ausgeführt werden und die Arme 11 können alternativ auch parallel und/oder in 90°-Winkeln zueinander angeordnet werden. Jeder der Arme 11 weist in etwa mittig eine Querschnittsverjüngung 12 auf, die sich über die Höhe des, im Querschnitt gesehen, rechteckförmigen Arm 11 jeweils erstrecken. Aus Übersichtlichkeitsgründen sind hier nur einige der Querschnittsverjüngungen mit einem Bezugszeichen versehen. Auf die Funktion der Querschnittsverjüngungen 12 soll später näher eingegangen werden. An dem Heizkörper 8 sind weiterhin zwei PTC-Heizelemente 13 angeordnet. Hierzu weist der Heizkörper 8, der vorzugsweise aus Aluminium gefertigt ist, am Kern 10 zwei Aufnahmetaschen 14 auf, in die jeweils ein PTC-Heizelement 13 zumindest bereichsweise formschlüssig eingesetzt ist. Vorzugsweise sind die PTC-Heizelemente, wie in Figur 2A dargestellt, an dem Kern 10 gegenüberliegend angeordnet. Von dem jeweiligen PTC-Heizelement 13 führt eine Anschlussleitung 15 derart weg, dass sie senkrecht von der durch den Heizkörper 8 gebildeten Ebene parallel zueinander und nach unten gerichtet abstehen. Figur 2B zeigt den Heizkörper 8 in einer Draufsicht, sodass die PTC-Heizelemente 13 sowie die Anschlussleitungen 15 nicht erkennbar sind. Jedoch zeigt Figur 2B, dass der Kern 10 des Heizkörpers 8 zum Bilden der Aufnahmetaschen 14 an den entsprechenden Abschnitten verbreitert ausgebildet ist. Alternativ können die PTC-Heizelemente 13 natürlich auch auf einer Seite angebracht oder an eine Seitenfläche des Grundkörpers 8 beispielsweise am Kern 10 oder an einem oder mehreren der Arme 11 angeordnet werden.

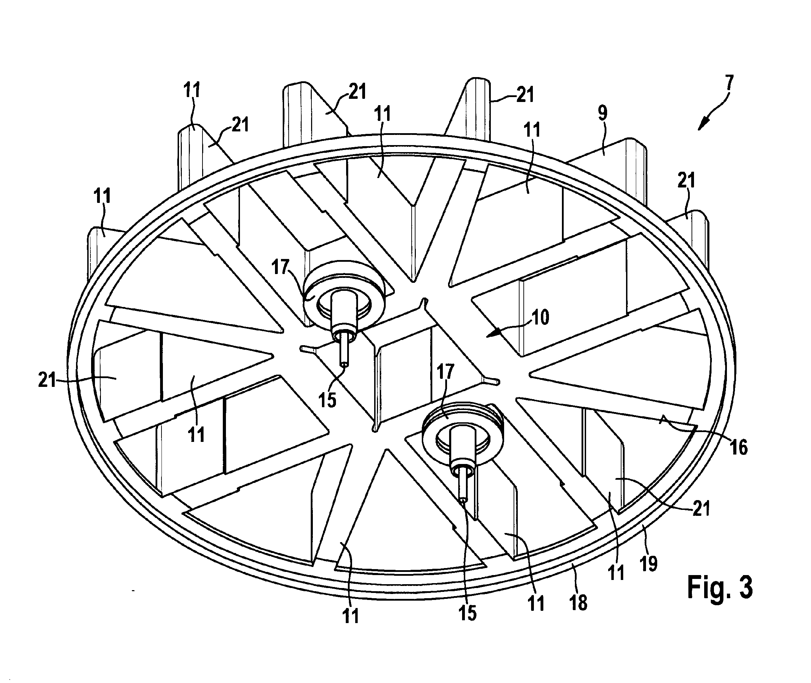

Durch die anschließende Umspritzung des Grundkörpers 8 mit den daran und/oder darin angeordneten PTC-Heizelementen 13 wird der Grundkörper 8 mit der in der Figur 1 gezeigten Kunststoffummantelung 9 versehen. Figur 3 zeigt hierzu eine Ausführungsform des Heizelements 7 in einer perspektivischen Darstellung von schräg unten. Durch die Kunststoffummantelung 9 sind die Querschnittsverjüngungen 12 des Heizkörpers 8 vorzugsweise verdeckt beziehungsweise ausgeglichen. Darüber hinaus sind die Anschlussleitungen 15 jeweils zumindest bereichsweise von Kunststoffmaterial umgeben. Im Wesentlichen koaxial zu den Anschlussleitungen 15 weist die Kunststoffummantelung 9 an ihrer Unterseite 16 zwei kreisringförmig erhabene Kontaktflächen 17 auf. Weiterhin weist die Kunststoffummantelung 9 einen Stützring 18 auf, der sich über den gesamten Außenumfang des Heizelements 7, insbesondere zu dessen Stabilisierung, erstreckt. Der Stützring 18 weist ebenfalls an seiner Unterseite eine Kontaktfläche 19 auf, die sich über den gesamten Umfang des Stützrings 18 erstreckt. Alternativ können der Stützring 18 und/oder die Kontaktflächen 19 entfallen.

Die Kunststoffummantelung 9 des Heizelements 7 weist einen HDPE-Kunststoff wie der Grundkörper 2 auf und ist darüber hinaus mit einem elektrisch nicht leitfähigen Füllstoff zum Erhöhen der Wärmeleitfähigkeit der Kunststoffummantelung 9 versehen. Bei dem Füllstoff handelt es sich um Glasfasern und/oder um mindestens einen mineralischen Füllstoff mit jeweils einer hohen Wärmeleitfähigkeit, der einen Gewichtsanteil von etwa 40 %. Bis auf die freiliegenden Enden der Anschlussleitungen 15 der PTC-Heizelemente 13 ist das Heizelement 7 vollständig durch die Kunststoffummantelung 9 eingehaust. Vorzugsweise werden der HDPE-Kunststoff und die Füllstoffe weiterhin derart gewählt, dass der Wärmeausdehnungskoeffizient der Kunststoffummantelung 9 und des Heizkörpers 8 nahe beieinander liegen, sodass zulässige Dehnungen des Kunststoffs nicht überschritten werden. Bei zu unterschiedlichen Wärmeausdehnungskoeffizienten von Heizkörper 8 und Kunststoffummantelung 9 können die entstehenden Dehnungen durch Formänderung reduziert werden.

Bei der Montage wird das Heizelement 7 auf den Grundkörper 2, wie in Figur 1 dargestellt, aufgesetzt, wobei die Anschlusskontakte bildenden freien Enden der Anschlussleitungen 15 in entsprechend angeordnete Gegenkontaktaufnahmen in dem Grundkörper 2 eingeführt werden. Die Gegenkontaktaufnahmen sind vorzugsweise mit Anschlussleitungen verbunden, die sich durch den Grundkörper 2 bis zu einem Anschlussstecker 20 erstrecken, der im montierten Zustand des Tankeinbaumoduls von außen erreichbar ist. Vorzugsweise sind den Gegenkontaktaufnahmen ebenfalls kreisringförmige Kontaktflächen insbesondere koaxial zugeordnet, deren Durchmesser dem Durchmesser der Kontaktflächen 17 entsprechen, sodass beim Aufsetzen des Heizelements 7 auf dem Grundkörper 2 die Kontaktflächen 17 auf den Gegenkontaktflächen des Grundkörpers 2 aufliegen. Damit kann der Grundkörper 2 und das Heizelement 7 beziehungsweise dessen Kunststoffummantelung 9 an den so gebildeten Kontaktstellen miteinander verschweißt werden. Da beide Elemente den gleichen Kunststoff aufweisen, kann durch das Verschweißen auf einfache Art und Weise eine dichte und robuste Verbindung zwischen dem Heizelement 7 und dem Grundkörper 2 erstellt werden. Alternativ können auch unterschiedliche Kunststoffe verwendet werden, vorausgesetzt diese lassen sich mit ausreichender Festigkeit und Dichtheit miteinander verschweißen. Darüber hinaus wird die elektrische Schnittstelle 21, gebildet durch die Anschlussleitungen 15 sowie die entsprechenden Gegenkontaktaufnahmen des Grundkörpers 2, von dem Material des Grundkörpers 2 und der Kunststoffummantelung 9 dicht eingehaust. Vorzugsweise wird die Schnittstelle 21 mittels kraftschlüssigen Verbindungsverfahren kontaktiert. Alternativ sind die elektrischen Kontakte jeweils mit einer entsprechenden schmelzbaren Lötmasse versehen, die bevorzugt bei dem Schweißvorgang erhitzt und aufgeweicht wird, sodass die elektrischen Kontakte miteinander stoffschlüssig verbunden werden, während Grundkörper 2 und Heizelement 7 miteinander verschweißt werden. Als Schweißverfahren wird vorzugsweise ein Heizelement-Schweißen, LaserSchweißen, Infrarot-Schweißen, Ultraschall-Schweißen oder InduktionsSchweißen angewandt. Durch den Einsatz der dichten, robusten und lebensdauerstabilen Verschweißung an der Schnittstelle beziehungsweise Kontaktstelle wird eine Ausleitung der elektrischen Kontakte der PTC-Heizelemente 13 innerhalb der Schweißung aus dem Tank heraus realisiert.

Werden die PTC-Heizelemente 13 bestromt beziehungsweise aktiviert, so wird über dem Aluminiumheizkörper 8 die Wärme verteilt. Die Querschnittsverjüngungen 7 sorgen hierbei dafür, dass sich die Wärme zunächst im Bereich 10 ausbreitet, sodass die Flüssigkeit im Entnahmebereich, also in dem der Entnahmeöffnung 4 zugeordneten Bereich, besonders schnell und zuerst erwärmt und gegebenenfalls aufgetaut wird. Durch die Querschnittsverjüngungen 12 wird die Heizenergie stufenweise über den Heizkörper 8 verteilt. Damit kann mit gleicher zur Verfügung stehender Heizenergie der Entnahmebereich in vorgegebenem Zeitraum aufgetaut werden. Das Eis wird nicht an allen Kontaktstellen des Heizelements 7 mit gleicher Energie aufgetaut, so ist nachhaltige Flüssigkeitsbereitstellung sichergestellt. Außerdem kann so verhindert werden, dass Eis nur aufgeheizt wird, ohne dass es vom festen in den flüssigen Zustand übergeht, was bei tiefen Temperaturen durch zu geringe Heizleistung passieren kann. Dies wird durch die unterschiedliche Wärmabstrahlung aufgrund der Querschnittsverjüngung 12 verhindert.

Da der Grundkörper 2 lediglich aus HDPE-Kunststoff besteht, wirkt der Grundkörper 2 gegenüber der Kunststoffummantelung 9 wie eine thermische Isolierung. Dadurch wird die erzeugte Wärme nicht unnötig verschwendet und die zur Verfügung stehende Energie optimal ausgenutzt. Vorzugsweise werden der HDPE-Kunststoff und die Füllstoffe derart gewählt wird, dass die Kunststoffummantelung 9 eine Wärmeleitfähigkeit von mehr als 0,5 W/mK aufweist.

Wie in Figur 3 dargestellt, weisen die Arme 11 an ihren freien Enden vorzugsweise verdickte Bereiche 21 auf, die die Wärmeabstrahlung des Heizelements 7 weiter beeinflussen. Die verdickten Bereiche 21werden durch in diesen Bereichen entsprechende dickere Kunststoffummantelung 9 erzeugt.

Die freien Enden der Anschlussleitung 15 sind vorteilhafterweise als integrierte Steckermesser ausgebildet, die entweder, wie dargestellt, direkt nach dem Umspritzen des Heizkörpers 8 einen elektrischen Stecker bilden oder bei Verbindung mit einem weiteren Bauteil des Grundkörpers 2 als ein Schneid- oder Klemmkontakt ausgeführt sind, um eine einfache und kostengünstige elektrische Verbindung zu ermöglichen. Besonders bevorzugt sind die Anschlussleitungen, die durch den Grundkörper 2 führen, derart parallel zu dem Entnahmekanal 3 angeordnet, dass die Abwärme der Anschlussleitungen den Entnahmekanal 3 auftaut beziehungsweise warmhält. Dabei kann entweder durch entsprechende Werkstoffwahl die Wärme des Heizelements 7 in dem Entnahmekanal 3 weitergeleitet und/oder durch entsprechende Werkstoffwahl des Grundkörpers 2 die Wärme durch elektrischen Widerstand in der Anschlussleitung erzeugt werden. Vorzugsweise werden Stromschienen oder -leitungen als Kontaktierung zwischen den PTC-Elementen 13 und dem Stecker 20 verwendet.

Zusätzlich kann die Kunststoffummantelung 9 eine Schnittstelle zur Befestigung des Filterelements 6 aufweisen und beispielsweise durch Verschweißen eine Einheit mit dem Filter bilden. Bevorzugt weist das Heizelement 7 alternativ oder zusätzlich einen Schwappschutz auf, der vorzugsweise durch die Kunststoffummantelung 9 gebildet ist. Auch ist die Integration eines Füllstandssensors und/oder dessen Eisschutzelementen in die Kunststoffummantelung 9 denkbar. Vorzugsweise ist das Heizelement 7 derart an dem Grundkörper 2 angeordnet, dass es zumindest seitlich und oben frei zugänglich für die Flüssigkeit ist, sodass durch Konvektion viel Flüssigkeit aufgetaut werden beziehungsweise warmgehalten werden kann. Wie am besten aus Figur 1 ersichtlich, weist die Kunststoffummantelung 9 an ihren Kanten jeweils eine Schräge beziehungsweise Fase 22 auf, von denen hier nur einige mit Bezugszeichen versehen sind. Besonders bevorzugt weisen die unten, also dem Grundkörper 2 zugewandten Kanten des Heizelements 7 jeweils eine Fase 22 beziehungsweise Schräge auf. Dadurch werden zumindest zum Teil die durch den Aggregatzustandswechsel der Flüssigkeit an dem Heizelement 7 wirkenden Kräfte kompensiert. Durch Vorsehen der Fasen 22 an der Unterseite wird insbesondere die Schweißstelle zwischen Kunststoffummantelung 9 und Grundkörper 2 entlastet. Besonders bevorzugt kann eine Regelungsbeziehungsweise Leistungseinheit mit in die Kunststoffummantelung 9 oder in den Grundkörper 2 durch Umspritzen integriert werden.

Das Filterelement 6 ist vorzugsweise möglichst flach ausgebildet, und weist eine große Filteroberfläche auf. Durch die flache Ausbildung ist das Filterelement 6 möglichst schnell in der Flüssigkeit auftaubar und kann dadurch auch ohne Druckaufbau im Filterinneren durchfrieren. Die große Filteroberfläche ist von Vorteil, um zum Beispiel das Filterelement 6 als Feinfilter auszuführen und damit andere, stromabwärts gelagerte Filter einsparen zu können, und um die Lebensdauer zu erhöhen. Vorzugsweise wird die große Filteroberfläche durch ein Falten des Filtermaterials erreicht. Nachdem die benötigte Filteroberfläche und der Abscheidegrad zum Beispiel durch Kundenanforderung, Systemanforderung usw. feststeht, wird bevorzugt zuerst ein rechteckiger langer Streifen aus Filtergewebe ausgeschnitten, anschließend gleichmäßig gefaltet, wobei optional danach die freiliegenden, aufeinander zu gefalteten kurzen Filterkanten miteinander, beispielsweise durch Verschweißen verbunden werden können. Nun kann das Filtermaterial flachgedrückt und vorzugsweise zur Bildung eines Filterträgerelements an seinem inneren und äußeren Rand mit Kunststoff umspritzt werden. Bei dem Umspritzvorgang müssen beide Kunststoffhälften durch Druck auf das Filtergewebe eine dichte Verbindung sicherstellen, damit das Filtergewebe nicht überspritzt wird. Auch ist es denkbar, zwischen den übereinander liegenden Filtergeweben eine Versteifungs- und/oder Halterippe vorzusehen beziehungsweise mit anzuspritzen. Vorzugsweise wird die Halterippe einstückig mit der Umspritzung des inneren und des äußeren Rands ausgebildet. Vorzugsweise weisen die Halterippen, wenn vorhanden, eine Kontur auf, die der Kontur des Heizelements 7 entspricht, sodass beim Einfrieren mögliche Druckbelastungen auf Heizelement 7 und Filterelement 6 minimiert/vermieden werden.

Die Entnahmeöffnung 4 ist vorzugsweise direkt durch den Grundkörper 2 gebildet und liegt im montierten Zustand im Bereich des Kerns 10 des Heizelements 7. Um die Filterhöhe möglichst gering zu halten, sind die übereinander liegende Filtergewebe ineinander gefaltet, sodass sie ineinander greifen. Damit der Abstand zwischen den übereinander liegenden Filtergeweben zueinander und zwischen den Faltungen nicht gegen Null geht, ist bevorzugt ein Abstandhalter zwischen den Filtergeweben vorgesehen, der insbesondere aus Kunststoff gefertigt ist. Der Abstandhalter kann beispielsweise aus wellenförmigen, dünnen Stegen bestehen und bei runder Filterform eine spinnennetzähnliche Form haben und an die Filterwellenkontur angepasst sein. Der Abstandhalter kann auch mit den Kunststoffteilen des Filterelements, welche die Filtergewebe aneinander halten, verschweißt sein. Ebenso ist es denkbar, den Entnahmekanal beziehungsweise die Entnahmeöffnung 3 in den Abstandhalter zu integrieren. Vorzugsweise sind dem Filterelement 6 Schmutzfallen an dem Grundkörper 2, an dem Heizelement 7 und/oder an einem anderen angrenzenden Bauteil zugeordnet, die derart gestaltet sind, dass Schmutzpartikel erst über einen Umweg in Kontakt mit dem Filtermaterial geraten können. Besonders bevorzugt wird zum Beispiel auf der von dem Grundkörper 2 weg weisenden Seite des Elements 6 eine schutzabweisende, elastische Filterscheibe angebracht.

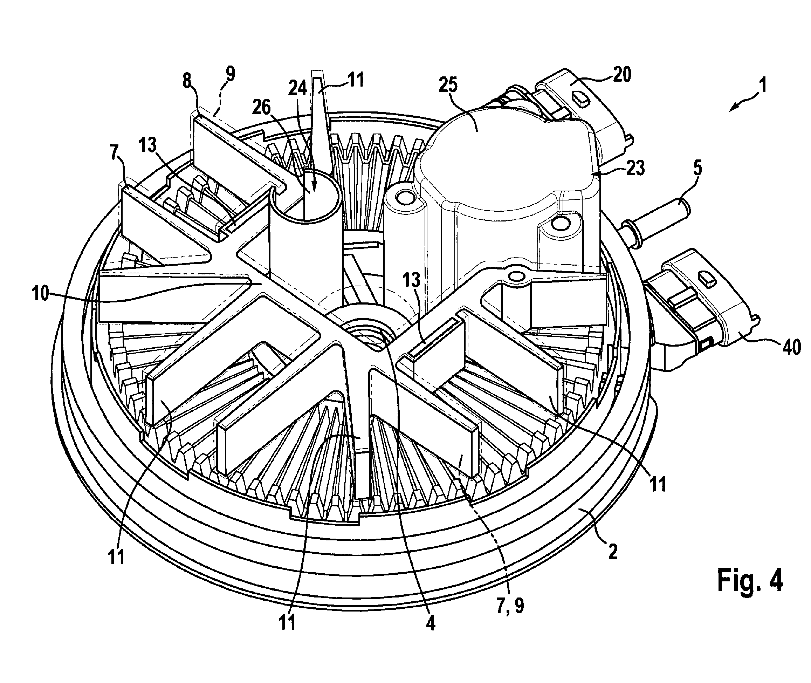

Figur 4 zeigt eine weitere Ausführungsform des Tankeinbaumoduls 1 in einer perspektivischen Darstellung. Aus den bereits vorhergehenden Figuren bekannte Elemente sind mit den gleichen Bezugszeichen versehen, sodass insofern auf die oben stehende Beschreibung verwiesen wird. Im Folgenden soll im Wesentlichen auf die Unterschiede eingegangen werden.

Das Tankeinbaumodul 1 gemäß Figur 4 unterscheidet sich von dem vorhergehenden Ausführungsbeispiel insbesondere dahingehend, dass eine Fördereinrichtung 23 sowie ein Füllstandssensor 24 mit integriertem Temperatursensor in den Grundkörper 2 mit integriert sind. Die Fördereinrichtung 23 umfasst ein von dem Grundkörper 2 gebildetes Gehäuseteil 25, in welchem eine Pumpe zum Absaugen der Flüssigkeit aus dem Tank angeordnet beziehungsweise anordenbar ist. Die Fördereinrichtung 23 kann zusätzlich noch mindestens eine der folgenden Komponenten beinhalten: Rücksaugpumpe, Drucksensor, Heizung, Schutzfilter, elektrischer/hydraulischer Stecker, Ventile oder dergleichen.

Dem Füllstandssensor 24 ist ein seitlich geschlitztes Reflexionsrohr 26 zugeordnet, das zu einem Abschnitt des Heizelements 7 hin mit seinem Schlitz ausgerichtet ist, sodass in dem Reflexionsrohr 26 befindliche Flüssigkeit schnell aufgetaut werden kann und auch eine Füllhöhe unterhalb des Reflexionsrohres 26 gemessen werden kann. Das Reflexionsrohr 26 kann alternativ auch in die Kunststoffummantelung 9 integriert sein, ist jedoch bevorzugt einstückig mit dem Grundkörper 2 ausgebildet. Dadurch wird die Anzahl notwendiger Dichtstellen weiter verringert. Die Auswerteeinheit des Füllstandssensors 24 ist vorzugsweise in dem Grundkörper 2 vergossen oder umspritzt angeordnet. Die zu der Auswerteeinheit und/oder zu dem Füllstandssensor 24 führenden elektrischen Leitungen sind vorzugsweise ebenfalls in den Grundkörper 2 umspritzt oder eingebettet und können über einen weiteren Stecker 40 kontaktiert werden. Der Füllstandssensor 24 ist vorzugsweise als berührungslos arbeitender Sensor ausgebildet und erfasst den Füllstand auf Basis von elektrischen Wellen, Schallwellen und/oder Lichtwellen.

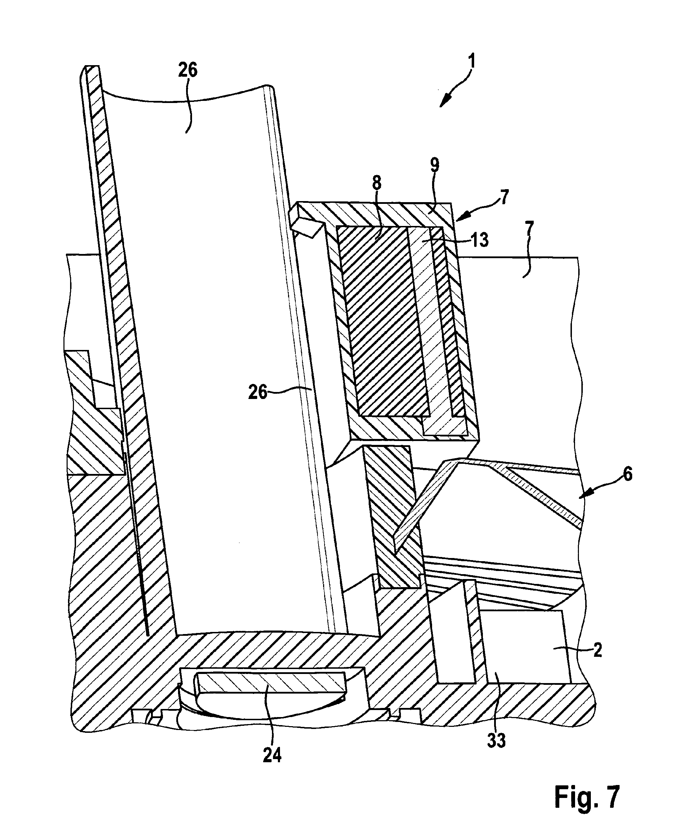

Figur 7 zeigt einen Querschnitt durch das Tankeinbaumodul 1 im Bereich des Füllstandssensors 24. Hierbei ist zu erkennen, dass der Füllstandssensor 24 möglichst tief in dem Grundkörper 2 positioniert ist, wobei er vorzugsweise eine runde, schmutzabweisende Oberfläche aufweist, um über die Lebensdauer eine ausreichende Signalqualität gewährleisten zu können. Außerdem ist es von Vorteil, wenn in der näheren Umgebung des Füllstandssensors 24 Schmutzfallen 33 angebracht sind, die dafür Sorgen, dass sich Schmutzablagerungen dort und nicht an dem Füllstandssensor 24 ansammeln. Alternativ könnte der Füllstandssensor 24 auch als berührender Füllstandssensor ausgebildet sein, und mit einem entsprechenden Tastelement in das Tankinnere hineinragen. Vorzugsweise erstreckt sich das Tastelement dann durch das Reflexionsrohr 26, um durch dieses vor äußeren Einflüssen geschützt zu sein. Alternativ kann die Festigkeit durch Versteifung mit Rippen erhöht werden.

Bevorzugt ist der Füllstandssensor 24 beziehungsweise dessen Sensorkopf durch Einschweißen oder durch Umspritzen in den Grundkörper 2 integriert angeordnet, wie in Figur 7 gezeigt. Die Länge des Reflexionsrohrs 26 ist vorzugsweise derart lang, dass die Genauigkeit der Messung im unteren Drittel des Füllstandsbereichs des Tanks besonders hoch ist, da gerade hier der Füllstand genau erfasst werden muss. Um die Signalqualität unabhängig von der sich ändernden Flüssigkeitsdichte der Flüssigkeit zu machen und/oder gleichzeitig eine Fehlbetankung zu erkennen, kann im Grundkörper 2, im Filterelement 6 und/oder an der Kunststoffummantelung 9 eine Referenzfläche integriert werden. Durch Senden eines Signals zur Referenzfläche und Empfang und anschließender Auswertung des Signals können Veränderungen in der Dichte der Flüssigkeit, durch Unterschiede in der Signallaufzeit, festgestellt werden. Dadurch kann zum Beispiel eine Fehlbetankung erkannt werden und die Genauigkeit der Füllstandshöhenmessung verbessert beziehungsweise in Abhängigkeit zur Dichte korrigiert werden.

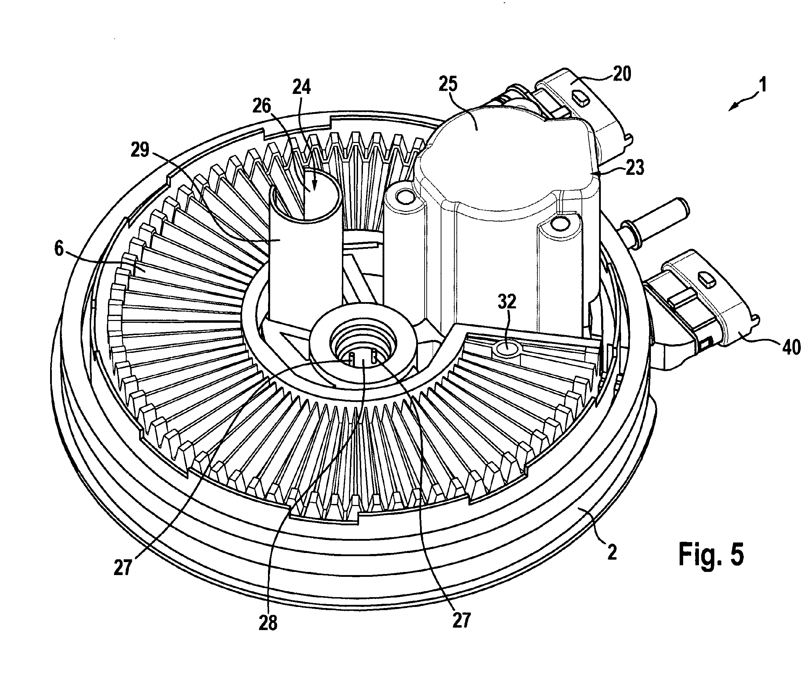

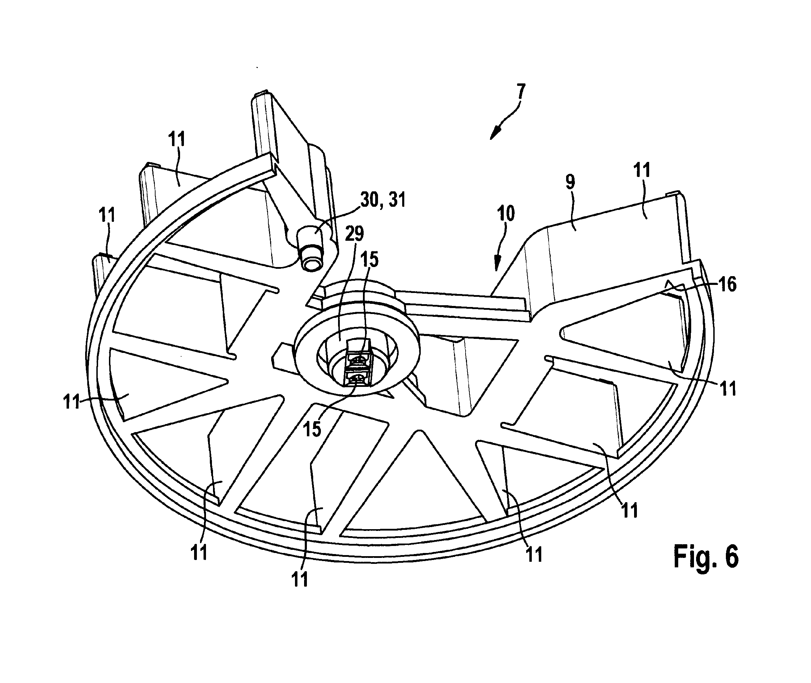

Figur 5 zeigt das Tankeinbaumodul 1 gemäß der zweiten Ausführungsform ohne das Heizelement 7, welches in Figur 6 perspektivisch dargestellt ist. Im Unterschied zu den vorhergehenden Ausführungsformen sind die freien Enden der Anschlussleitungen 15 für die PTC-Elemente 13 des Heizelements 7 mittig angeordnet und enden in Aufnahmekontakten. Der Grundkörper 2 weist ebenfalls mittig entsprechende Gegenkontakte 27 auf, die senkrecht in eine Vertiefung 28 des Grundkörpers 2 hineinragen. Das Heizelement 7 beziehungsweise dessen Kunststoffummantelung 9 weist im Bereich der Anschlussleitungen 15 einen der Vertiefung 28 entsprechend ausgebildeten Vorsprung 29 auf, der bei der Montage in der Vertiefung 27 geführt wird. Vorzugsweise sind die Seitenwände des Vorsprungs 29 und/oder der Vertiefung 28 derart schräg ausgebildet, dass eine Zentrierung des Heizelements 7 an den Grundkörper 2 erfolgt. Dadurch werden auch die Gegenkontakte in die Kontaktaufnahmen der Anschlussleitung 15 automatisch eingeführt. Durch anschließendes Verschweißen, wie oben bereits beschrieben, wird hier eine dichte und robuste Verbindung zwischen dem Heizelement 7 und dem Grundkörper 2 und somit auch eine sichere elektrische Schnittstelle 21 zwischen dem Heizelement 7 und dem Grundkörper 2 gebildet.

Die Kunststoffummantelung 9 weist an ihrer dem Grundkörper 2 zugewandten Unterseite einen zylinderförmigen Vorsprung 30 auf, der derart an dem Heizelement 7 angeordnet ist, dass er im montierten Zustand der Entnahmeöffnung 3 gegenüber liegt. Gemäß der vorliegenden Ausführungsform liegt die Entnahmeöffnung 3 nicht mittig, sondern seitlich versetzt dazu in dem Grundkörper 2. Der Vorsprung 30 dient als Wärmeleitelement 31, durch welches die Wärme von dem Heizelement 7 näher zu der Entnahmeöffnung 4 geleitet wird. Vorzugsweise weist das Filterelement 6 eine Durchgangsöffnung 32 auf, durch welche der Vorsprung 30 führbar ist. Im montierten Zustand durchdringt somit der Vorsprung 30 das Filterelement 6, um besonders nahe an der Entnahmeöffnung 4 zu enden. Hierdurch wird gewährleistet, dass insbesondere im Entnahmebereich befindliche Flüssigkeit schnell und effizient aufgetaut werden kann.

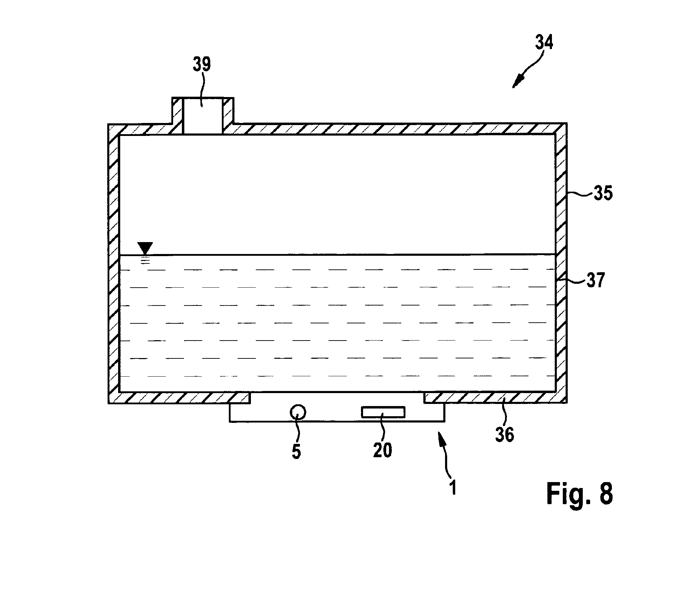

Figur 8 zeigt einen Flüssigkeitstank 34 für ein Fahrzeug, der zum Aufbewahren von Abgasnachbehandlungsmittel, insbesondere eine Harnstoff-Wasser-Lösung, ausgebildet ist und eine Wandung 35 aufweist, die vorzugsweise aus Kunststoff, besonders bevorzugt aus HDPE-Kunststoff gefertigt ist. Die Wandung bildet einen Boden 36 sowie eine sich senkrecht zu dem Boden entlang dessen Umfang erstreckende Seitenwand 37. Im Boden 36 weist die Wandung 35 eine Öffnung 38 auf, in welche das oben beschriebene Tankeinbaumodul 1 eingesetzt ist. Zum festen und dichten Verbinden des Tankeinbaumoduls 1 mit dem Flüssigkeitstank 34 sind Kontaktflächen vorgesehen, die bei der Montage miteinander verschweißt werden. Da vorzugsweise die Wandung 35 und der Grundkörper 2 des Tankeinbaumoduls 1 aus dem gleichen Werkstoff, nämlich HDPE-Kunststoff, gefertigt sind, lässt sich die Verbindung auf einfache Art und Weise durch die oben bereits genannten Schweißverfahren realisieren. Zum Befüllen des Flüssigkeitstanks 34 mit dem Abgasnachbehandlungsmittel weist der Flüssigkeitstank 34 an seiner Oberseite eine vorzugsweise verschließbare Befüllöffnung 39 auf, der gegebenenfalls auch ein Entlüftungsventil zugeordnet sein kann. Durch die Einbaulage des Tankeinbaumoduls 1 im Boden 36 des Flüssigkeitstanks 34 wird ein gleichmäßiges und sicheres Erwärmen der Flüssigkeit in dem Tank sowie eine sichere Flüssigkeitsentnahme stets gewährleistet.

## Patentansprüche

1. Tankeinbaumodul (1) zur Entnahme von Flüssigkeit aus einem Fahrzeugtank, umfassend einen Grundkörper (2) aus einem Kunststoff, an dem eine Flüssigkeitsentnahmeeinrichtung (23), die wenigstens eine dem Tankinnenraum zuordenbare Entnahmeöffnung (4) umfasst, und mindestens ein elektrisches Heizelement (7) angeordnet sind, wobei das elektrische Heizelement (7) einen Heizkörper (8) mit einer umspritzten Kunststoffummantelung (9) umfasst, **dadurch gekennzeichnet, dass** die Kunststoffummantelung (9) einen mit dem Grundkörper verschweißbaren Kunststoff, insbesondere hochdichtes Polyethylen, und/oder den gleichen Kunststoff wie der Grundkörper (2) sowie mindestens einen Füllstoff mit hoher Wärmeleitfähigkeit aufweist und mit dem Grundkörper (2) an wenigstens einer Kontaktstelle (17) verschweißt ist.

2. Tankeinbaumodul nach Anspruch 1, **dadurch gekennzeichnet, dass** der Füllstoff einen Anteil von 20 % bis 65 %, insbesondere 40 %, des Gewichts der Kunststoffummantelung (9) ausmacht.

3. Tankeinbaumodul nach einem der vorhergehenden Ansprüche, **dadurch gekennzeichnet, dass** als elektrisch nicht-leitfähiger Füllstoff mindestens ein mineralischer Füllstoff und/oder Glasfasern vorgesehen sind.

4. Tankeinbaumodul nach einem der vorhergehenden Ansprüche, **dadurch gekennzeichnet, dass** der Heizkörper (8) zumindest im Wesentlichen aus Aluminium gebildet ist und mindestens ein PTC-Heizelement (13) zum Heizen aufweist.

5. Tankeinbaumodul nach einem der vorhergehenden Ansprüche, **gekennzeichnet durch** mindestens ein der Entnahmeöffnung (4) vorgeschaltetes Filterelement (6) zur Filterung der Flüssigkeit vor deren Entnahme.

6. Tankeinbaumodul nach einem der vorhergehenden Ansprüche, **dadurch gekennzeichnet, dass** sich der Heizkörper (8) im Wesentlichen in einer Ebene sternartig erstreckt und insbesondere mindestens eine Querschnittsverjüngung (12) aufweist.

7. Tankeinbaumodul nach einem der vorhergehenden Ansprüche, **dadurch gekennzeichnet, dass** wenigstens eine der verschweißten Kontaktstellen eine elektrische Schnittstelle (21) zwischen dem Heizelement (7) und einer durch den Grundkörper (2) führenden Anschlussleitung (15) bildet beziehungsweise aufweist.

8. Tankeinbaumodul nach einem der vorhergehenden Ansprüche, **dadurch gekennzeichnet, dass** die Anschlussleitung (15) einem in die Entnahmeöffnung (4) mündenden Entnahmekanal (3) des Grundkörpers (2) zugeordnet ist.

9. Tankeinbaumodul nach einem der vorhergehenden Ansprüche, **dadurch gekennzeichnet, dass** mindestens eine Kante der Kunststoffummantelung (9) und/oder des Heizkörpers (8) einen großen Radius oder eine Schräge beziehungsweise Fase (22) aufweist.

10. Flüssigkeitstank (34) für ein Fahrzeug, insbesondere für ein Abgasnachbehandlungssystem eines Kraftfahrzeugs, mit wenigstens einer Wandung (35), die eine Öffnung (38) aufweist, in welcher ein Tankeinbaumodul (1) zur Entnahme von Flüssigkeit aus dem Tank die Öffnung (38) verschließend angeordnet ist, **gekennzeichnet durch** die Ausbildung des Tankeinbaumoduls (1) nach einem oder mehreren der vorhergehenden Ansprüche.

## Claims

1. Tank insert module (1) for removing liquid from a vehicle tank, comprising a main body (2) made of a plastic material, on which a liquid removal device (23), which comprises at least one removal opening (4) that can be assigned to the tank interior, and at least one electrical heating element (7) are arranged, wherein the electrical heating element (7) comprises a heating body (8) with an extrusion-coated plastic encapsulation (9), **characterized in that** the plastic encapsulation (9) comprises a plastic that can be welded to the main body, in particular high-density polyethylene, and/or comprises the same plastic as the main body (2) as well as at least one filler material with high thermal conductivity and is welded to the main body (2) at least at one contact point (17).

2. Tank insert module according to Claim 1, **characterized in that** the filler material accounts for a proportion of 20 % to 65 %, in particular 40 %, of the weight of the plastic encapsulation (9).

3. Tank insert module according to one of the preceding claims, **characterized in that** at least one mineral filler material and/or glass fibers is/are provided as electrically non-conductive filler material.

4. Tank insert module according to one of the preceding claims, **characterized in that** the heating body (8) is formed at least substantially from aluminum and has at least one PTC heating element (13) for heating.

5. Tank insert module according to one of the preceding claims, **characterized by** at least one filter element (6) arranged upstream of the removal opening (4) for filtering the liquid before removal thereof.

6. Tank insert module according to one of the preceding claims, **characterized in that** the heating body (8) extends substantially in one plane in a star-like manner and in particular has at least one cross-sectional tapered portion (12).

7. Tank insert module according to one of the preceding claims, **characterized in that** at least one of the welded contact points forms or has an electrical interface (21) between the heating element (7) and a connection line (15) leading through the main body (2).

8. Tank insert module according to one of the preceding claims, **characterized in that** the connection line (15) is assigned to a removal channel (3) of the main body (2) discharging into the removal opening (4).

9. Tank insert module according to one of the preceding claims, **characterized in that** at least one edge of the plastic encapsulation (9) and/or of the heating body (8) has a large radius or an inclined surface or chamfer (22).

10. Liquid tank (34) for a vehicle, in particular for an exhaust gas aftertreatment system of a motor vehicle, with at least one wall (35), which has an opening (38), in which a tank insert module (1) for removing liquid from the tank is arranged so as to close the opening (38), **characterized by** the design of the tank insert module (1) according to one or more of the preceding claims.

## Revendications

1. Module de montage de réservoir (1) pour prélever un liquide d'un réservoir de véhicule, comprenant un corps de base (2) en plastique, sur lequel sont disposés un dispositif de prélèvement de liquide (23) qui comprend au moins une ouverture de prélèvement (4) pouvant être associée à l'espace interne du réservoir et au moins un élément chauffant électrique (7), l'élément chauffant électrique (7) comprenant un corps chauffant (8) avec une enveloppe en plastique surmoulée (9), **caractérisé en ce que** l'enveloppe en plastique (9) présente un plastique pouvant être soudé au corps de base, notamment un polyéthylène haute densité, et/ou le même plastique que le corps de base (2) ainsi qu'au moins une charge de grande conductibilité thermique, et est soudée au corps de base (2) au niveau d'au moins un point de contact (17).

2. Module de montage de réservoir selon la revendication 1, **caractérisé en ce que** la charge constitue une proportion de 20 % à 65 %, en particulier de 40 % du poids de l'enveloppe en plastique (9).

3. Module de montage de réservoir selon l'une quelconque des revendications précédentes, **caractérisé en ce que** l'on prévoit en tant que charge non électriquement conductrice au moins une charge minérale et/ou des fibres de verre.

4. Module de montage de réservoir selon l'une quelconque des revendications précédentes, **caractérisé en ce que** le corps chauffant (8) est formé au moins essentiellement en aluminium et présente au moins un élément chauffant à CTP (13) pour le chauffage.

5. Module de montage de réservoir selon l'une quelconque des revendications précédentes, **caractérisé par** au moins un élément filtrant (6) monté en amont de l'ouverture de prélèvement (4), pour le filtrage du liquide avant son prélèvement.

6. Module de montage de réservoir selon l'une quelconque des revendications précédentes, **caractérisé en ce que** le corps chauffant (8) s'étend essentiellement en forme d'étoile dans un plan et présente notamment au moins un rétrécissement de section transversale (12).

7. Module de montage de réservoir selon l'une quelconque des revendications précédentes, **caractérisé en ce qu'**au moins l'un des points de contact soudés présente ou forme une interface électrique (21) entre l'élément chauffant (7) et une conduite de raccordement (15) conduisant à travers le corps de base (2).

8. Module de montage de réservoir selon l'une quelconque des revendications précédentes, **caractérisé en ce que** la conduite de raccordement (15) est associée à un canal de prélèvement (3) du corps de base (2) débouchant dans l'ouverture de prélèvement (4).

9. Module de montage de réservoir selon l'une quelconque des revendications précédentes, **caractérisé en ce qu'**au moins une arête de l'enveloppe en plastique (9) et/ou du corps chauffant (8) présente un grand rayon ou un biseau ou un chanfrein (22).

10. Réservoir de liquide (34) pour un véhicule, notamment pour un système de post-traitement de gaz d'échappement d'un véhicule automobile, comprenant au moins une paroi (35) qui présente une ouverture (38), dans laquelle est disposé un module de montage de réservoir (1), fermant l'ouverture (38), pour prélever du liquide hors du réservoir, **caractérisé par** la réalisation du module de montage de réservoir (1) selon l'une ou plusieurs des revendications précédentes.
